# EUROPEAN PATENT SPECIFICATION

(11) **EP 1 239 234 B1**
(45) Date of publication and mention of the grant of the patent: **24.05.2006**
(21) Application number: 01128513.7
(22) Date of filing: 29.11.2001
(51) Int. Cl.: F24F 5/00, F25B 13/00, F24D 15/04

(54) **Combined air conditioning and domestic hot water production unit and procedure for the management of said unit**
Kombinationseinheit einer Klimaanlage und einer Brauchwasserheizanlage und Verfahren zum Betreiben dieser Einheit
Combinaison d'une unité de climatisation et de production d'eau chaude sanitaire et procédé pour gérer cette unité

(30) Priority: 07.03.2001 IT MI010470
(43) Date of publication of application: 11.09.2002
(73) Proprietor: De'Longhi S.p.A., 31100 Treviso (IT)
(72) Inventor: De' Longhi, Giuseppe, 31100 Treviso (IT)
(74) Representative: Rapisardi, Mariacristina

(56) References cited:
- DE-A- 19 702 903
- US-A- 4 592 206
- US-A- 4 685 307
- US-A- 4 693 089
- US-A- 4 924 681
- US-A- 5 269 153
- US-A- 5 937 663

## Description

The present invention refers to a combined air-conditioning and domestic water production unit and to a management procedure for said unit.

For some time combined units of the type indicated which comprise a primary heat exchanger, for air-conditioning, connected in parallel to a domestic water heat exchanger have been known; these are in turn connected to a secondary heat exchanger.

Units of the traditional type can be used both for producing hot water (on the domestic heat exchange) and for air-conditioning (heating or cooling).

However, when they are used for heating (winter use) traditional units can provide either hot domestic water or heating of a room, but cannot provide the two services (heating of a room and hot domestic water) simultaneously.

When they are used to cool a room (summer use), on the other hand, traditional units are not capable of managing in an optimal way, not even occasionally, the energy which is taken from the cooled room. US-A-4 685 307 discloses a combined air-conditioning amd domestic water production unit according to preamble of claim 1 and a procedure for the management of a combined air-conditioning and domestic water production unit according to the preamble of claim 3.

The technical task proposed by the present invention, therefore, is to eliminate the reported technical drawbacks of the prior art, realising a combined air-conditioning and domestic hot water production unit and indicating a procedure for the management of said unit which allows both domestic hot water and heating of a room to be provided simultaneously.

In this technical task a purpose of the invention is to realise an unit which allows optimal management of the energy which is taken from the cooled room.

In particular the unit according to the finding uses the totally or partially recovered energy to heat the domestic water.

The last but not least purpose of the invention is to realise a combined air-conditioning and domestic hot water production unit and a procedure for the management of said unit which alllows a reduction in total operational costs with respect to traditional units.

The technical task, as well as these and other purposes, according to the present invention are achieved by realising a combined air-conditioning and domestic hot water production unit comprising a first circuit exhibiting at least one primary heat exchanger, for the air-conditioning connected to a secondary heat exchanger with the interposition of expansion means, said primary and secondary heat exchangers each being connected to a throttle valve, suitable for selecting the flow path of a fluid inside of it, connected to the inlet of a compressor, characterised in that it comprises a domestic water heat exchanger for supplying hot water to the users, connected on one side to the outlet of said compressor, and on the other side to said throttle valve.

The invention also refers to a procedure for the management of a combined air-conditioning and domestic hot water production unit of the type which comprises a first circuit associated through a dometic water heat exchange with a second circuit, and associated through a primary heat exchanger with a third circuit, said exchanges being suitable for the simultaneous or alternative management of hot water production and air-conditioning of a room, characterised in that, when the unit manages the hot water production and the heating of a room simultaneously, the hot water is previously brought substantially to a first temperature limit, subsequently the flow in at least one of said second and third circuits is modulated to heat the fluid of the third circuit substantially bringing it to a second temperature limit, subsequently the flow in at least one of said second and third circuits is again modulated to further heat the domestic hot water.

Other characteristics of the present invention are defined, moreover, in the other claims.

Further characteristics and advantages of the invention will become clearer from the description of some preferred but not exclusive ebodiments of the combined air-conditioning and domestic hot water production unit and of the procedure for the management of said unit according to the invention, where the unit is illustrated for indicating and not limiting purposes in the attached drawings, wherein:
- figure 1 shows a circuit diagram of a first embodiment of the unit according to the finding (with a secondary heat exchanger for air);
- figure 2 shows a circuit diagram of a second embodiment of the unit according to the finding (with the secondary heat exchanger for water);
- figure 3 shows a simplified diagram of the unit according to the finding in "summer" configuration; and
- figure 4 shows a simplified diagram of the unit according to the finding in "winter" configuration.

With reference to the quoted figures, a combined air-conditioning and domestic hot water production unit is shown, wholly indicated with reference number 1.

The unit comprises a first circuit 2 which comprises a primary heat exchanger 3 for air-conditioning, for example plate or tubular type radiators, where hot or cold water is produced which can be used for units with terminals suitable for producing heating or cooling, i.e. conditioning, of the air in rooms or for process systems.

The circuit 2 also comprises a secondary heat exchanger 4 and, arranged between the exchanges 3 and 4, expansion means 5 consisting, for example, of a expansion valve.

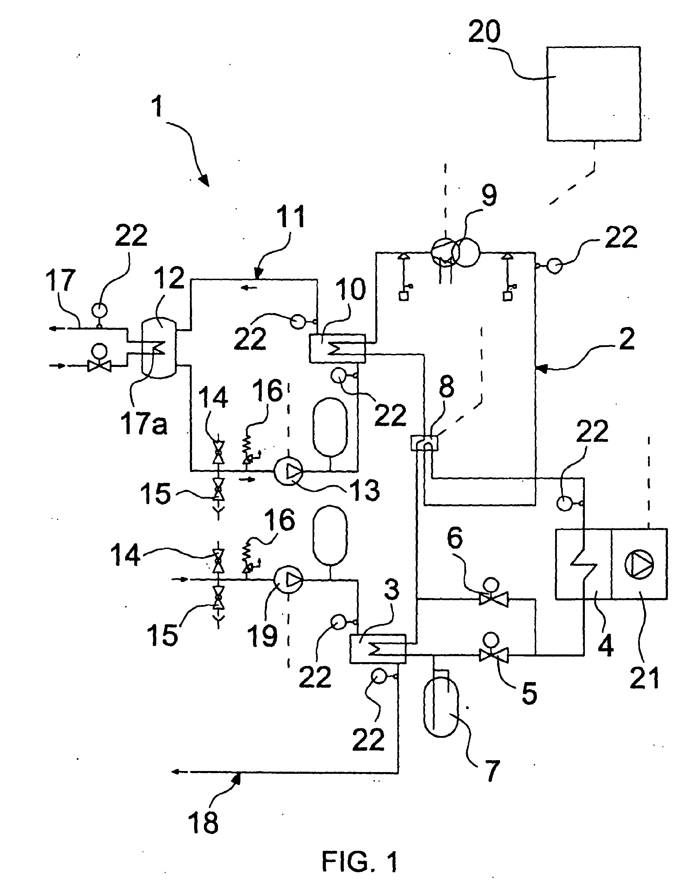

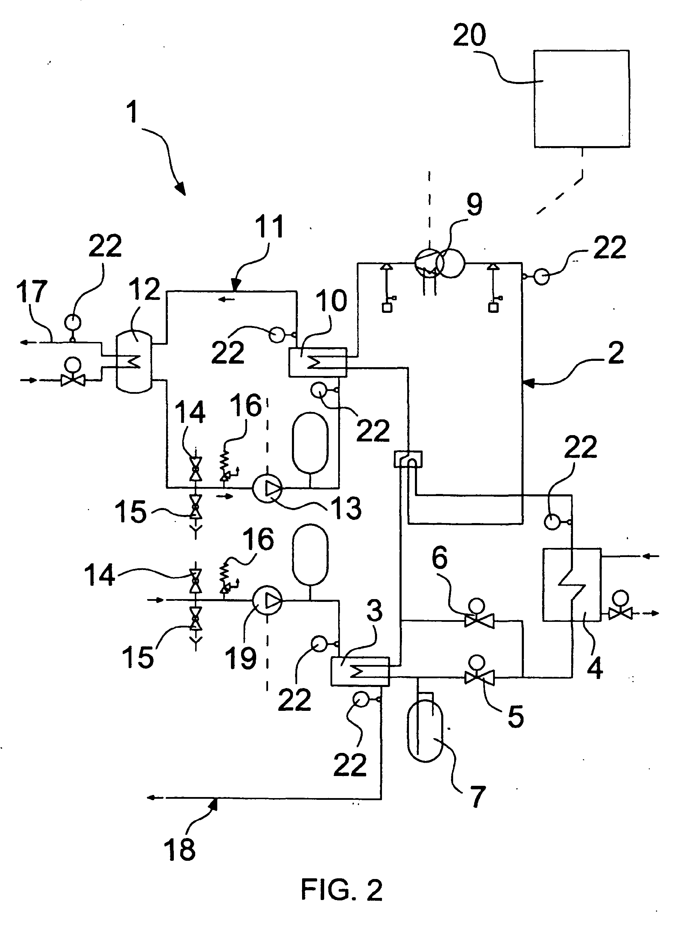

The secondary exchanger is of the finned battery type with a fan (figure 1) or else plate or tubular type radiators (figure 2), suitable for absorbing or giving off energy.

Moreover, the circuit 2 exhibits a by-pass valve 6 parallel to the expansion valve 5 and to the exchange 3 and a fluid recepticle 7.

Each of the heat exchanges 3, 4 is connected to a four way valve 8 suitable for selecting the flow path of a fluid inside of it and in particular for reversing the flow path of the fluid in a portion of the first circuit 2, changing the function of the primary 3 and secondary 4 heat exchanges (which can function as condensors or as evaporators).

The four way valve 8 is also connected to the inlet of a compressor 9.

The circuit 2 comprises a domestic water heat exchanger 10 for supplying hot water to a user, connected on one side to the outlet of the compressor 9, and on the other side to the four way valve 8.

The domestic water exchanger is a plate or tubular type radiator. The primary 3 and domestic water 10 exchanges are always connected in series for all the configurations which the valve 8 can assume.

The unit 1 comprises, moreover, a second circuit 11 associated with the domestic water heat exchanger 10.

The second circuit 11 comprises a water tank 12 and a first pump 13, which guarantees the circulation of the fluid inside of it.

The second circuit 11 is preferably in a closed loop and is equipped with a fill/refill valve, drain valve 15 and pressure release valve 16.

The unit also comprises a user supply line 17 presenting heat exchange means 17a associated with the tank 12.

The heat exchange means 17a, for example consisting of a tubular coil, are suitable for transferring the heat of a fluid gathered in the water tank 12 to another fluid which flows in the user supply line 17.

The unit comprises a third circuit 18 associated with the primary exchanger 3, which comprises a second pump 19, suitable for guaranteeing the circulation of the fluid inside of it, as well as the fill/refill valve 14, the drain valve 15 and the pressure release valve 16.

The unit 1 comprises operation and control means 20 connected at least to the first and second pump 13, 19 and, preferably, also to the compressor 9 and to a fan 21 asssociated with the secondary heat exchanger 4 (exchange 4 of the air type, figure 1) or else with a pump (exchange 4 of the water type, figure 2).

Moreover, the operation and control means 20 are connected to sensors 22 for measuring the temperature of the fluid which circulates at least in the second and third circuit 11, 18.

In the example shown the sensors 22 are not only installed on the second and third circuit 11, 18, but also on the first circuit 2 and on the user supply line 17.

The operation and control means 20 are in this way suitable for regulating the fluid flow rate in the second circuit 11 and in the third circuit 18, so as to accumulate water in the tank 12 at a predetermined temperature, and at the same time make fluid at a predetermined temperature flow in the third circuit 18.

Advantageously, the valve 8 is a four-way electrovalve, also connected to the operation and control means 20.

The operation of the combined air-conditioning and domestic hot water production unit according to the invention is clear from what has been described and illustrated and, in particular, is substantially the following.

Previously the unit must be set to "summer" or "winter" mode.

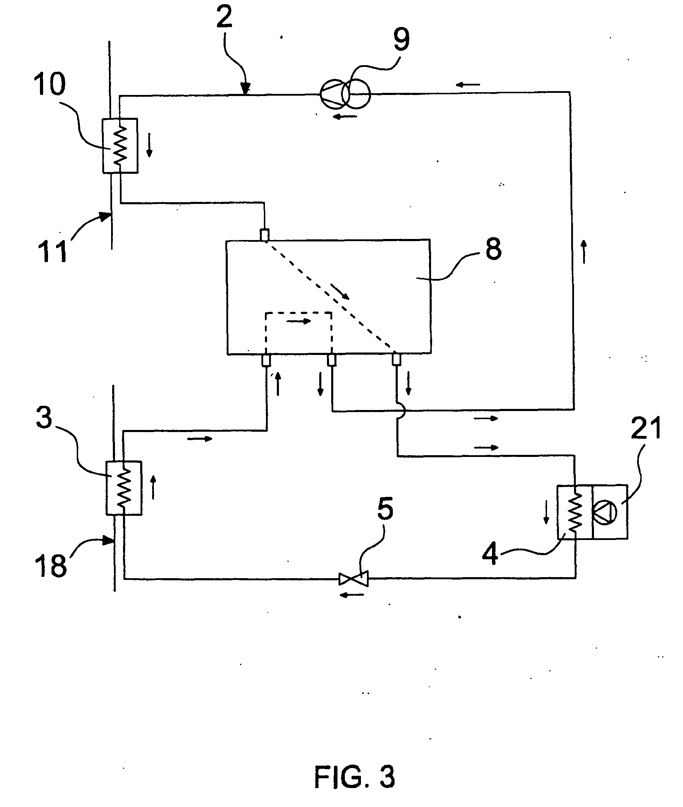

When operating in summer mode (figure 3) the operation and control means 20 position the valve 8 in the configuration laid out in figure 3.

In this configuration the domestic hot water exchanger 10 and the secondary exchanger 4 operate as condensors, while the primary exchanger 3 operates as an evaporator.

Essentially, in the domestic hot water exchanger 10, the heat of the fluid which circulates in the first circuit 2 is transferred to the water of the second circuit 11 and, when the heat thus removed in the exchange 10 is not enough to keep the refrigerating cycle, which is carried out by the fluid flowing in the first circuit 2, constant (since the temperature of the water of the second circuit 11 is close to the outlet temperature of the compressor 9), the operation and control means 20 also activate the fan 21 so as to also remove heat in the secondary exchanger.

In this way the excess heat from the refrigeration cycle carried out by the fluid of the first circuit is not wasted, but is mostly used for producing domestic hot water.

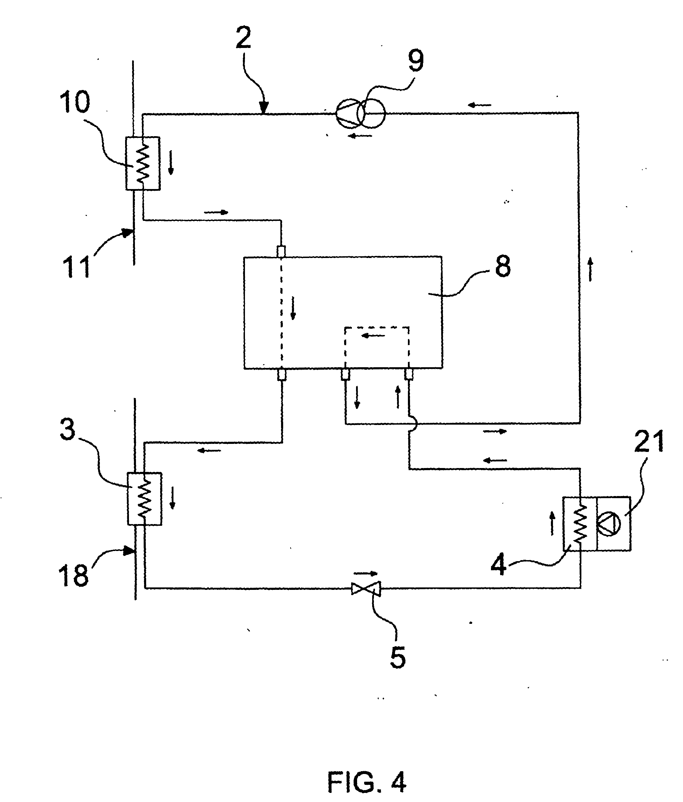

Operating in winter mode (figure 4), on the other hand, the primary 3 and domestic water 10 heat exchanges operate as condensors, while the secondary heat exchanger 4 operates as an evaporator.

In this mode the operation and control means 20 set the flow rate of the fluid in the second circuit 11 so that at the start of the operation the domestic hot water is brought to a first temperature limit TL1, for example equal to 50°C.

Subsequently, the more the water from the first circuit approaches the first temperature limit TL1, the less the heat that is taken from the fluid which circulates in the first circuit 2.

This heat is given off in the primary exchangerr 3 to the water which circulates in the third circuit 18.

Essentially, therefore, domestic hot water substantially at the first temperature limit TL 1 is obtained and the water of the third circuit 18 is heated.

The operation and control means 20 set the flow rate of the fluid in the third circuit 18 so that the water (in the third circuit 18) is heated up to a second temperature limit TL2; however, since as its temperature approaches the temperature limit TL2 it requires less heat to reach such a second temperature limit TL2, as the temperature of the water of the third circuit approaches the second temperature limit TL2 the operation and control means 20 regulate the first and second pump 13, 19 so that in the domestic water exchanger 10 the water of the second circuit 11 takes away more heat from the fluid of the first circuit 2.

Essentially, therefore, the operation and control means 20 operate so as to transfer the excess thermal energy from the primary exchanger 3 to the domestic water exchanger 10.

In this way the temperature of the domestic hot water is notably increased, being brought to a temperature close to the outlet temperature of the compressor 9 (for example equal to roughly 85°C) and at the same time the temperature of the water of the primary exchanger 3 is substantially kept constant (for example equal to roughly 50°C).

The operation and control means 20 are also suitable for making the unit 1 operate also only for the production of domestic hot water, or else only for heating or cooling, i.e. conditioning, rooms.

The finding also refers to a procedure for the management of a combined air-conditioning and domestic hot water production unit.

The procedure is suitable for being performed by a combined air-conditioning and domestic hot water production unit 1 of the type comprising a first circuit 2 associated through a domestic water heat exchanger 10 with a second circuit 11, and associated through a primary heat exchanger 3 with a third circuit 18.

The exchanges 10 and 3 are suitable for simultaneous or alternative management of the production of domestic hot water and air-conditioning of a room.

When the unit 1 manages the production of domestic hot water and the heating of a room simultaneously, the domestic hot water is previously brought substantially to a first temperature limit TL1, the flow rate in at least the second circuit 11 or third circuit 18 is subsequently modulated to heat the fluid of the third circuit 18 bringing it substantially up to a second temperature limit TL2.

Subsequently, the flow rate in at least the second circuit 11 or third circuit 18 is again modulated to further heat the domestic hot water.

In a preferred embodiment the flow rates of the second circuit 11 and of the third circuit 18 are modulated simultaneously and the modulation of the flow rates is obtained by varying the operating conditions of at least the pumps 13 and 19.

In fact it can be seen how the combined air-conditioning and domestic hot water production unit and the procedure for the management of said unit according to the invention are particularly advantageous because in operation they allow domestic hot water and heating of a room to be provided simultaneously.

Moreover, the unit is particularly cost-effective and environmentally-friendly since it allows the energy taken from the cooled air to be at least partially recovered.

The combined air-conditioning and domestic hot water production unit and the procedure for the management of said unit thus conceived are susceptible to numerous modifications and variants, all falling within the inventive concept; moreover all the details can be replaced by technically equivalent elements.

In its practical embodiments the materials used, as well as the sizes, can be whatever according to the requirements and the state of the art.

## Claims

1. Combined air-conditioning and domestic hot water production unit (1) comprising a first circuit (2) exhibiting at least one primary heat exchanger (3), for air-conditioning connected to a secondary heat exchanger (4) with the interposition of expansion means (5), said primary and secondary heat exchangers (3, 4) each being connected to a four way valve (8), suitable for selecting the flow path of a fluid inside of it, connected to the inlet of a . compressor (9), aand a domestic water heat exchanger (10) for supplying hot water to a user, connected on one side to the outlet of said compressor (9), and on the other side to said four way valve (8), said primary heat exchanger (3) and said domestic water heat exchanger (10) being always connected in series; a second circuit (11) associated with said domestic water heat exchanger (10) which comprises a water tank and a first pump (13), suitable for guaranteeing the circulation of a fluid inside of it,
said second circuit (11) being in a closed loop, and comprising an open user supply line (17) exhibiting heat exchange means (17a) associated with said tank (12), said heat exchange means (17a) being suitable for transferring the heat from a fluid stored in said tank (12) to another fluid which flows in said user supply line; and
a third circuit (18) associated with said primary exchanger (3), which comprises a second pump (19), suitable for guaranteeing the circulation of fluid inside of it;
**characterised in that** it comprises operation and control means (20) connected to at least said first and second pumps (13, 19) and, moreover, to said four way valve (8) and to sensors (22) for measuring the temperature of the fluid circulating at least in said second and third circuits (11, 18), said operation and control means (20) controlling said first and respectively second pump (13, 19) for regulating the flow rate of the fluid circulating in said second and respectively third circuits (11, 18) so as to being the domestic hot water to a first temperature limit (TL1) and subsequently the fluid of said third circuit (18) to a second temperature unit (TL2).

2. Unit (1) according to the previous claim, **characterised in that** said operation and control means (20) are also connected to a fan (21) suitable for managing the flow of a heat exchange fluid of said secondary heat exchanger (4).

3. Procedure for the management of a combined air-conditioning and domestic hot water production unit (1) of the type comprising a first circuit (2) associated through a domestic water heat exchanger (10) with a second circuit (11), and associated through a primary heat exchanger (3) with a third circuit (18), said exchanges (10, 3) being suitable for the simultaneous or alternative management of the production of domestic hot water and air-conditioning of a room, **characterised in that**, when said unit (1) manages the production of domestic hot water and heating of a room simultaneously, firstly the domestic hot water is substantially brought to a first temperature limit (TL1) by controlling the flow fo the second circuit (18), the flow of said third (18) circuit is subsequently modulated to heat the fluid of said third circuit (18) bringing it up to a second temperature limit (TL2), then the flow in at least one of said second (11) and third (18) circuits is again modulated to further heat the domestic hot water.

4. Procedure according to claim 3, **characterised in that** the flow rates of said second and third circuits (11, 18) are modulated simultaneously once both temperature limit (TL1 and TL2) have been reached.

5. Procedure according to claims 3 or 4, **characterised in that** the modulation of the flow rate is obtained by controlling at least one first and one second pump (13, 19).

## Patentansprüche

1. Kombinierte Klimatisierungs- und Warmwassererzeugungseinheit der privaten Haushalte (1), welche einen ersten Kreislauf umfasst (2), welcher zumindest einen primären Wärmeaustauscher (3) aufweist, welcher zur Klimatisierung mit einem sekundären Wärmeaustauscher (4) mit Dazwischenlegung einer Ausdehnungseinrichtung (5) verbunden ist; wobei die besagten primären und sekundären Wärmeaustauscher (3, 4) jeweils mit einem Vierwegeventil (8) verbunden sind, welches dazu geeignet ist, den Flussweg einer Flüssigkeit auszuwählen, die sich in dessen Innerem befindet, welcher mit dem Einlass eines Kompressors (9) verbunden ist, und einen Wasserwärmeaustauscher der privaten Haushalte (10) zur Warmwasserverteilung an einen Benützer, welcher auf der einen Seite mit dem Auslass des besagten Kompressors (9) verbunden ist und auf der anderen Seite mit dem besagten Vierwegeventil (8), wobei der besagte primäre Wärmeaustauscher (3) und der besagte Wasserwärmeaustauscher der privaten Haushalte (10) immer in Reihen angeschlossen sind; welche einen zweiten Kreislauf (11) umfasst, der mit dem besagten Wasserwärmeaustauscher der privaten Haushalte (10) verbunden ist, welcher einen Wassertank und eine erste Pumpe (13) umfasst, welche dazu geeignet ist, den Umlauf einer Flüssigkeit, die sich darin befindet, zu garantieren,
wobei der besagte zweite Kreislauf (11) eine geschlossene Schleife ist und eine offene Benützerverteilerlinie (17) umfasst, welche eine Wärmeaustauscheinrichtung (17a) aufweist, die mit dem besagten Tank (12) verbunden ist, wobei die Wärmeaustauscheinrichtung (17a) geeignet ist, die Wärme von einer Flüssigkeit, die in dem besagten Tank (12) gespeichert ist, zu einer anderen Flüssigkeit zu übertragen, welche in der besagten Benützerverteilerlinie fließt; und
welche einen dritten Kreislauf (18) umfasst, welcher mit dem besagten primären Wärmeaustauscher (3) verbunden ist, welcher eine zweite Pumpe (19) umfasst, welche dazu geeignet ist, den Umlauf der Flüssigkeit, die sich darin befindet, zu garantieren; **dadurch gekennzeichnet, dass** sie eine Arbeits- und Kontrolleinrichtung (20) umfasst, welche zumindest mit besagter erster und zweiter Pumpe (13, 19) verbunden ist und außerdem mit dem besagten Vierwegeventil (8) und mit Sensoren (22) zur Temperaturmessung der Flüssigkeit, die zumindest in den besagten zweiten und dritten Kreisläufen (11, 18) fließt, wobei die besagte Arbeits- und Kontrolleinrichtung (20) die besagte erste und zweite Pumpe (13, 19) zur Regulierung der Flussrate der Flüssigkeit kontrolliert, die jeweils in den besagten zweiten und dritten Kreisläufen (11, 18) fließt, sodass das Warmwasser der privaten Haushalte zu einem ersten Temperaturlimit (TL 1) und die Flüssigkeit des besagten dritten Kreislaufs (18) zu einem zweiten Temperaturlimit (TL 2) gebracht wird..

2. Einheit (1) nach dem vorhergehenden Anspruch, **dadurch gekennzeichnet, dass** die besagte Arbeits- und Kontrolleinrichtung (20) auch mit einem Lüfter (21) verbunden ist, der geeignet ist, den Fluss der Wärmeaustauschflüssigkeit des besagten sekundären Wärmeaustauschers (4) zu leiten.

3. Verfahren zur Leitung einer kombinierten Klimatisierungs- und Warmwassererzeugungseinheit der privaten Haushalte (1) einer Art, die einen ersten Kreislauf (2) umfasst, welcher durch einen Wasserwärmeaustauscher der privaten Haushalte (10) mit einem zweiten Kreislauf (11) verbunden ist und durch einen primären Wärmeaustauscher (3) mit einem dritten Kreislauf (18) verbunden ist, wobei die besagten Austausche (10, 3) geeignet sind, die gleichzeitige oder abwechselnde kontrollierte Erzeugung von Warmwasser der privaten Haushalte und Raumklimatisierung zu leiten, **dadurch gekennzeichnet, dass**, wenn die besagte Einheit (1) gleichzeitig die Erzeugung von Warmwasser der privaten Haushalte und Raumheizung leitet, zuerst das Warmwasser der privaten Haushalte grundsätzlich zu einem ersten Temperaturlimit (TL 1) gebracht wird, indem der Fluss des zweiten Kreislaufs (18) kontrolliert wird, der Fluss des besagten dritten Kreislaufs (18) grundsätzlich geregelt wird, um die Flüssigkeit des besagten dritten Kreislaufs (18) bis zu einem zweiten Temperaturlimit (TL 2) zu erheizen, dann der Fluss in zumindest einem der besagten zweiten (11) und dritten (18) Kreisläufe wieder geregelt wird, um weiter das Warmwasser der privaten Haushalte zu heizen.

4. Verfahren nach Anspruch 3, **dadurch gekennzeichnet, dass** die Flussraten der besagten zweiten und dritten Kreisläufe (11, 18) gleichzeitig geregelt werden, nachdem beide Temperaturgrenzen (TL 1 und TL 2) erreicht wurden.

5. Verfahren nach den Ansprüchen 3 oder 4, **dadurch gekennzeichnet, dass** die Regelung der Flussrate erreicht wird, indem zumindest eine erste und eine zweite Pumpe (13, 19) kontrolliert wird.

## Revendications

1. Unité combinée pour la production d'air conditionné et d'eau chaude d'usage domestique (1) comprenant un premier circuit (2) affichant au moins un échangeur de chaleur primaire (3) pour le conditionnement de l'air branché à un échangeur de chaleur secondaire (4) avec l'interposition de moyens d'expansion (5), lesdits échangeurs de chaleur primaire et secondaire (3, 4) étant chacun d'entre eux branché à une vanne à quatre voies (8), apte à sélectionner un parcours de flux d'un fluide à son intérieur, branchée à l'entrée d'un compresseur (9), et un échangeur de chaleur pour eau d'usage domestique (10) pour l'alimentation d'eau chaude à un utilisateur, branché d'un côté à la sortie dudit compresseur (9), et de l'autre côté à ladite vanne à quatre voies (8), ledit échangeur de chaleur primaire (3) et ledit échangeur de chaleur pour eau d'usage domestique (10) étant toujours branchés en série ; un second circuit (11) associé avec ledit échangeur de chaleur pour eau d'usage domestique (10) qui comprend un réservoir d'eau et une première pompe (13), apte à assurer la circulation d'un fluide à son intérieur, ledit second circuit (11) étant dans une boucle fermée, et comprenant une ligne d'alimentation pour l'utilisateur ouverte (17) affichant des moyens de chaleur (17a) associés avec ledit réservoir (12), lesdits moyens d'échange de chaleur (17a) étant aptes à transférer la chaleur d'un fluide stocké dans ledit réservoir (12) à un autre fluide qui coule dans ladite ligne d'alimentation pour l'utilisateur ; et un troisième circuit (18) associé avec ledit échangeur primaire (3), qui comprend une seconde pompe (19), apte à assurer la circulation du fluide à son intérieur,
**caractérisée en ce qu'**elle comprend des moyens de fonctionnement et de commande (20) branchés à au moins ladite première et à ladite seconde pompe (13, 19) et, en outre, à ladite vanne à quatre voies (8) et à des capteurs (22) pour mesurer la température du fluide circulant au moins dans ledit premier et dans ledit second circuit (11, 18), lesdits moyens de fonctionnement et de commande (20) commandant respectivement ladite première et ladite seconde pompe (13, 19) pour régler le débit du fluide circulant respectivement dans lesdits second et troisième circuit (11, 18) de sorte que l'eau chaude d'usage domestique soit amenée à une première limite de température (TL1) et que, par la suite, le fluide dudit troisième circuit (18) soit amené à une seconde limite de température (TL2).

2. Unité (1) selon la revendication précédente, **caractérisée en ce que** lesdits moyens de fonctionnement et de commande (20) sont aussi branchés à un ventilateur (21) apte à gérer le flux d'un fluide d'échange de chaleur dudit échangeur de chaleur secondaire (4).

3. Procédé pour la gestion d'une unité combinée pour la production d'air conditionné et d'eau chaude d'usage domestique (1) du type comprenant un premier circuit (2) associé par le biais d'un échangeur de chaleur pour eau d'usage domestique (10) avec un second circuit (11), et associé par le biais d'un échangeur de chaleur primaire (3) avec un troisième circuit (18), lesdits échanges (10, 3) étant aptes à la gestion simultanée ou alternative de la production d'eau chaude d'usage domestique et d'air conditionné pour un local, **caractérisé en ce que** ladite unité (1) gère la production d'eau chaude d'usage domestique et le chauffage d'un local simultanément, premièrement l'eau chaude d'usage domestique est substantiellement amenée à une première limite de température (TL1) en commandant le flux du second circuit (18), le flux dudit troisième circuit (18) est modulé par la suite pour qu'il chauffe le fluide dudit troisième circuit (18), en lui amenant à une seconde limite de température (TL2), après quoi le flux dans au moins l'un desdits second (11) et troisième (18) circuits est modulé à nouveau en vue de chauffer ultérieurement l'eau chaude d'usage domestique.

4. Procédé selon la revendication 3, **caractérisé en ce que** les débit desdits second et troisième circuits (11, 18) sont modulés simultanément aussitôt que les deux limites de température (TL1 et TL2) sont atteintes.

5. Procédé selon les revendications 3 ou 4, **caractérisé en ce que** la modulation du débit est obtenue en commandant au moins une première et une seconde pompe (13, 19).
